Europäisches Patentamt

European Patent Office

Office européen des brevets

(19)

(11) Publication number: **0 331 515**
**A1**

(12) **EUROPEAN PATENT APPLICATION**

(21) Application number: **89302146.9**

(22) Date of filing: **03.03.89**

(51) Int. Cl.⁴: **A 47 J 37/04**
**A 47 J 39/02**

(30) Priority: **03.03.88 MX 11151**

(43) Date of publication of application:
**06.09.89 Bulletin 89/36**

(84) Designated Contracting States: **ES FR GB IT**

(71) Applicant: **Rocha, Octavio**
**Monte Capitolio No. 232 Piso No. 12 Condominio LaDiana**
**Col. Fuentes Del Valle**
**Garza Garcia, N.L. C.P. 66220 (MX)**

**Cano Espinoza, Serafin**
**Via Asinaria No. 315 Col. Fiemtes Del Valle**
**Garza Garcia, N.L. C.P. 66220 (MX)**

(72) Inventor: **Rocha, Octavio**
**Monte Capitolio No. 232 Piso No. 12 Condominio LaDiana**
**Col. Fuentes Del Valle**
**Garza Garcia, N.L. C.P. 66220 (MX)**

**Cano Espinoza, Serafin**
**Via Asinaria No. 315 Col. Fiemtes Del Valle**
**Garza Garcia, N.L. C.P. 66220 (MX)**

(74) Representative: **Simpson, Ronald Duncan Innes et al**
**A.A.Thornton & Co. Northumberland House 303-306 High**
**Holborn**
**London WCIV 7LE (GB)**

(54) **Heatable turntable.**

(57) A heatable turntable has a support base (4) and a deck (1)
mounted thereon for a rotation about a central axis of the deck,
the deck having a plurality of spaced thermal pads (2) mounted
thereon for warming especially foodstuffs placed thereon.
Electric heating wires in the pads are connected to positive and
negative pole pieces (5B,6B) mounted on the deck for rotation
therewith, which pole pieces are in sliding contact with positive
and negative pole pieces (6A,6B) mounted on the base which
are connected to a source of electrical current.

FIG. 2

EP 0 331 515 A1

Description

# BACKGROUND OF THE INVENTION

This invention relates generally to a heatable turntable of the Lazy Susan type for supporting articles such as food-stuffs, although other articles to be warmed can be likewise supported on the turntable.

Turntables of this general type are basically known as having a support base to which a deck is mounted for rotation about the central axis of the deck. The turntable is utilized principally on tables such that all those seated at the table can have access to different ingredients which are placed on the turntable deck, typically known as a Lazy Susan. However, it would be desirable to provide for the heating or warming of the articles supported on the rotating deck such that the articles, such as food, can be kept hot while being served.

## SUMMARY OF THE INVENTION

The present invention relates to a heatable turntable on which substances are placed, such as foodstuffs, the turntable having a base and a deck rotatable thereon about the central axis of the deck and having a plurality of spaced thermal pads mounted on the deck for rotation together therewith for heating or maintaining articles hot which are placed on the pads either directly or in receptacles.

Each pad contains an electrical heating element, first positive and negative pole pieces being fixably mounted on the base, and second positive and negative pole pieces being mounted on the deck for rotation together therewith. Pairs of electrical conductor lines extend from the heating element of each pad through the deck and are connected respectively to the second pole pieces which second pole pieces are respectively in sliding contact with the first pole pieces during rotational movement of the deck. And, electrical conducting lines having an on-off switch are provided for connecting the first pole pieces with a source of electrical current.

It is therefore an object of this invention to provide a heatable turntable for warming articles such as foodstuffs supported thereon and keeping them hot while positioned on heat pads mounted on the deck.

Other objects, advantages and novel features will become more apparent from the following detailed description of the invention when taken in conjunction with the accompanying drawings.

## BRIEF DESCRIPTION OF THE DRAWINGS

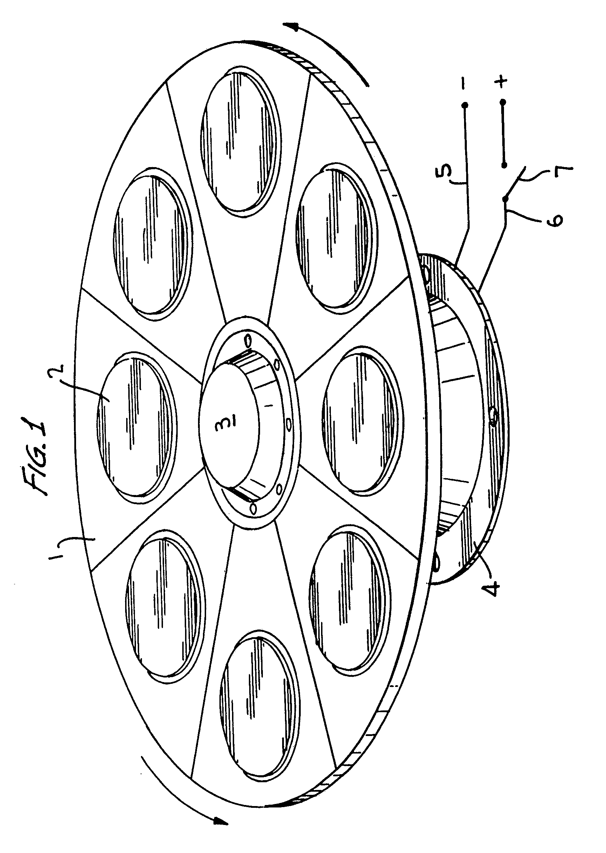

Figure 1 is a front prospective view of the turntable according to the invention; and

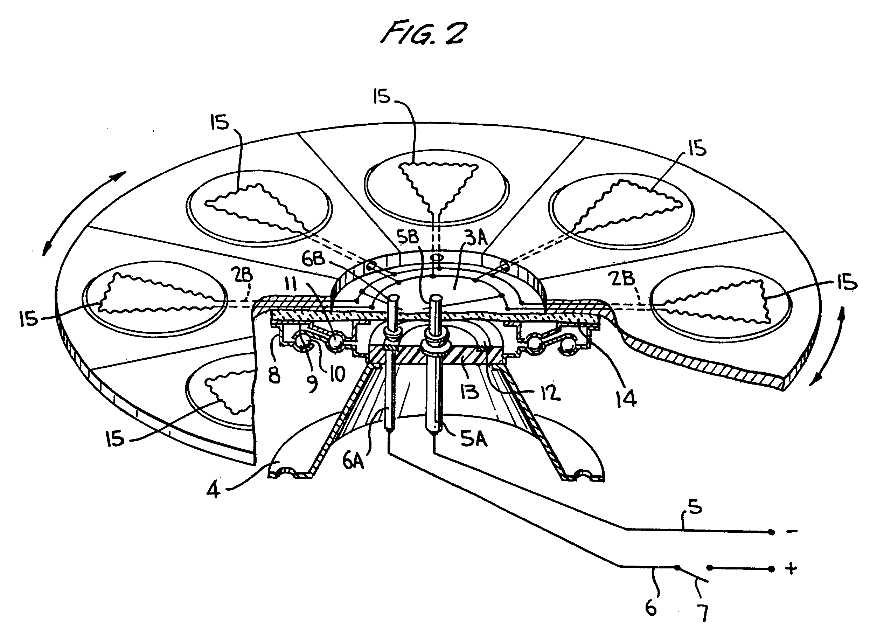

Figure 2 is a view similar to Figure 1, partly broken away, showing the pole pieces, resistance wires and electrical feed lines.

## DETAILED DESCRIPTION OF THE INVENTION

The turntable includes an upper rotatable deck 1 on which are mounted a plurality of spaced thermal pads 2 which may be heated by electric resistance wired embedded therein, or which may be otherwise heated by heaters fueled by solid or liquid substances.

The thermal pads, shown heated electrically, are mounted on the desk for rotation together therewith making it possible to alternate the position of each pad to one seated at a table for example, as may become necessary. A removable lid 3 is mounted at the central portion of the deck for covering the central electrical system 3A, and may be secured to the deck by screws, rivets or the like.

The deck is rotatably mounted on a base 4 and, by the provision of a main brace 9, is supported on bearings 10 and 11 arranged in a circular array and located in a channel 8 mounted to the brace which facilitates anti-friction rotation of the deck about its central axis.

Each thermal pad 2 has embedded therein a heating resistance wire 15 each having pairs of wires 2B embedded in the deck and extending into a central opening of the deck in which the central electrical system 3A is located. The system comprises first negative and positive pole pieces 5A and 6A mounted on support 4 and being connected to a source of electrical current via lines 5 and 6, the latter having an on-off switch 7. The system further comprises second negative and position pole pieces 5B and 6B mounted on the deck for rotation together therewith.

Pole pieces 5B and 6B are respectively in sliding contact with pole pieces 5A and 6A during rotational movement of the deck. For this purpose, pole pieces 5A and 5B are located along the central axis of the deck and may have flat confronting ends in sliding rotational contact with one another. Pole pieces 6A and 6B are radially spaces from the deck's central axis, and a ferrous metal ring 12 is mounted on support 4 in contact with pole piece 6A and has a radius equal to the radial spacing of pole piece 6A from the central axis. Pole piece 6B has a flat lower end which slides along ring 12 during rotation of the deck.

One of the wire pairs 2B is connected to pole piece 6B, and the other of the wires of this wire pair is connected to pole piece 5B.

Bearing 11 has a fixed lower main brace by means of which the deck is supported on base 4. To insulate the positive and negative electrical connections from one another, as well as between the deck and the base, insulation material 13 is provided in the support in which ring 12 is mounted, and an insulator disc 14 is located between the deck and the base for insulating the heat pads of the deck from the base and for avoiding short circuits or operational failures of resistance wires 15.

## Claims

Claim 1. A turntable comprising, a base, a deck mounted on said base for rotation about a central axis of said deck, a plurality of spaced thermal pads mounted on said deck for rotation together therewith, each said pad containing an electrical heating element, first positive and negative pole pieces fixedly mounted on said base, second positive and negative pole pieces mounted on said deck for rotation together therewith, pairs of electrical lines extending from said heating elements of said pads through said deck and connected respectively to said second pole pieces, said second pole pieces being respectively in sliding contact with said first pole pieces during rotational movement of said deck, and electrical lines having an on-off switch for connecting said first pole pieces with a source of electrical current.

Claim 2. The turntable according to claim 1, wherein said first and second negative pole pieces are mounted along said central axis, and said first and second positive pole pieces are radially spaced from said central axis, a ferrous metal ring on said base, said ring being connected to said first positive pole piece and having a radius equal to the radial spacing from said axis.

Claim 3. The turntable according to claim 1 or 2, wherein said deck has a central opening for exposing said second pole pieces, and a removable lid covering said opening.

Claim 4. The turntable according to claim 1, 2 or 3 wherein a circular array of roller bearings are provided between said deck and said base.

FIG.1

FIG. 2

EP 0 331 515 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-C- 568 461 (HOLLAND et al.) <br> * Page 1, lines 37-52; figure * | 1-2 | A 47 J 37/04 <br> A 47 J 39/02 |
| X | US-A-4 034 200 (VISAGIE) <br> * Column 4, line 46 - column 5, line 15; figures * | 1-2 | |
| X | US-A-1 507 883 (CAMPBELL) <br> * Page 1, lines 54-75; page 2, lines 17-105; figures 1-2,6 * | 1-2 | |
| A | US-A-3 459 922 (SMITH) <br> * Column 2, line 15 - column 3, lines 21,70-72; figures * | 1-4 | |
| A | DE-C- 110 468 (JEIDEL) <br> * Page 1, lines 9-23; figure 1 * | 3 | |
| A | GB-A-2 180 637 (THORN EMI APPLIANCES LTD) <br> * Page 1, lines 111-114; figure 1 * | 4 | |

TECHNICAL FIELDS SEARCHED (Int. Cl.4)

A 47 J

The present search report has been drawn up for all claims

| Place of search | Date of completion of the search | Examiner |
|---|---|---|
| THE HAGUE | 14-06-1989 | GAIC P.M.Z. |

EPO FORM 1503 03.82 (P0401)